# EUROPEAN PATENT APPLICATION

(11) **EP 4 733 060 A1**
(43) Date of publication of application: **29.04.2026**
(21) Application number: 24825983.0
(22) Date of filing: 20.06.2024
(51) Int. Cl.: B32B 5/02, B32B 27/32, B60R 13/08, G10K 11/168

(54) **LAMINATE, SOUND ABSORBING MATERIAL, AND AUTOMOTIVE INTERIOR MEMBER**

(30) Priority: 23.06.2023 JP 2023103689
(71) Applicant: Inoac Technical Center Co., Ltd., Nagoya-shi, Aichi 450-0003 (JP)
(72) Inventor: HAYAKAWA, Hiroki, Hadano-shi, Kanagawa 259-1304 (JP); SUMI, Takuya, Hadano-shi, Kanagawa 259-1304 (JP)
(74) Representative: WSL Patentanwälte Partnerschaft mbB
(86) International application number: PCT/JP2024/022436
(87) International publication number: WO 2024/262582

(57) **Abstract**

Provided are a laminate, a sound absorbing material, and an automobile interior member that are easily recycled and have sufficient sound absorbency. An embodiment of the present invention is a laminate (10). The laminate (10) includes a resin fiber layer (20) formed of a hot-melt resin and a substrate (30). The hot-melt resin is an olefin-based hot-melt resin, and a material of the substrate (30) is an olefin-based resin. The resin fiber layer (20) is formed by spray-applying a hot-melt resin onto the substrate (30).

## Description

### Technical Field

The present invention relates to a laminate, a sound absorbing material, and an automobile interior member.

### Background Art

Noise (external noise or noise derived from vibration during traveling) may enter a vehicle interior through a door interior or a vehicle body frame. In order to suppress this noise, a sound absorbing material is disposed on a back side of an automobile interior member such as a pillar.

In recent years, an automobile component including a sound absorbing material is required to have recyclability in view of environmental problems. In general, the sound absorbing material is manufactured by bonding a resin fiber layer formed of a nonwoven fabric or the like to a substrate with a double-sided tape or the like. In order to recycle such a sound absorbing material, a step of separating the substrate and the resin fiber layer is required for separating members, and operation thereof is complicated.

Therefore, Patent Literature 1 discloses a technique for manufacturing a sound absorbing material by integrating a substrate and a resin fiber layer formed of the same material by welding.

### Citation List

### Patent Literature

Patent Literature 1: JP H10-232681 A

### Summary of Invention

### Technical Problem

However, in the technique of Patent Literature 1, the step of separating the substrate and the resin fiber layer at the time of recycling is unnecessary, but sound absorbency at a welded portion is insufficient. In addition, there is a problem that a portion where welding can be performed is limited depending on the shape of the substrate.

Therefore, an object of the present invention is to provide a laminate, a sound absorbing material, and an automobile interior member that are easily recycled and have sufficient sound absorbency.

### Solution to Problem

The present inventors have conducted intensive studies, and found that the above problems can be solved by a laminate having a structure (layer) formed of a specific component, thereby completing the present invention. That is, the present invention is as follows.

An aspect of the present invention is a laminate.

The laminate includes a resin fiber layer formed of a hot-melt resin and a substrate, in which
the hot-melt resin is an olefin-based hot-melt resin,
a material of the substrate is an olefin-based resin, and
the resin fiber layer is formed by spray-applying the hot-melt resin onto the substrate.

Another aspect of the present invention is a laminate. The laminate includes:
a resin fiber layer formed of a hot-melt resin; and a substrate, in which
the hot-melt resin is an olefin-based hot-melt resin,
a material of the substrate is an olefin-based resin, and
a bonding area between the resin fiber layer and the substrate is 10% or more.

Still another aspect of the present invention is a sound absorbing material. The sound absorbing material includes the laminate according to either one of the above aspects.

Still another aspect of the present invention is an automobile interior member. The automobile interior member includes the laminate according to either one of the above aspects.

### Advantageous Effects of Invention

According to the present invention, it is possible to provide a laminate, a sound absorbing material, and an automobile interior member that are easily recycled and have sufficient sound absorbency.

### Brief Description of Drawings

[Fig. 1] Fig. 1 is a conceptual side view of a laminate according to the present embodiment.
[Fig. 2] Fig. 2 is a cross-sectional view schematically illustrating a conventional laminate {Fig. 2(a)} formed by welding and a laminate {Fig. 2(b)} of the present embodiment when a rib (protrusion) is formed on a substrate.

### Description of Embodiments

Hereinafter, a laminate, a sound absorbing material, an automobile interior member, and the like will be specifically described, but the present invention is not limited thereto.

In the present specification, when a plurality of upper limit values and a plurality of lower limit values are described separately, it is to be understood that all numerical ranges that can be set by freely combining these upper limit values and lower limit values are described in the present specification.

In the present specification, "spray applying" refers to spraying a molten hot-melt resin in a fibrous form using air pressure.

### 1. Structure of laminate

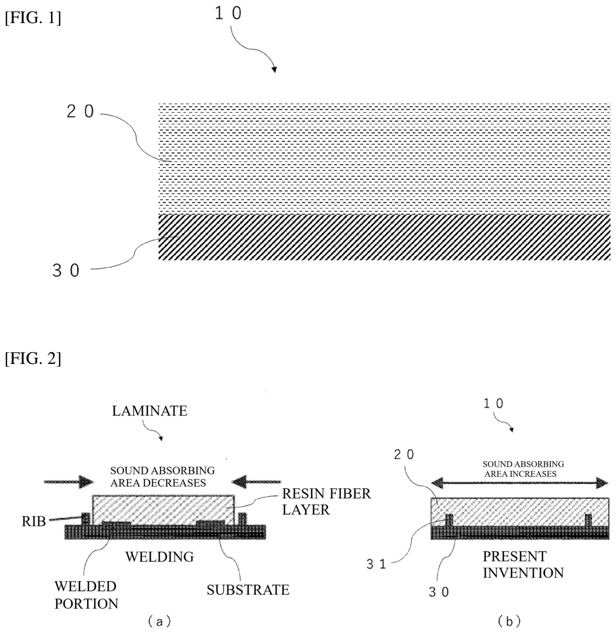

Fig. 1 is a conceptual side view of a laminate 10 according to the present embodiment. As illustrated in Fig. 1, the laminate 10 includes a resin fiber layer 20 and a substrate 30. Hereinafter, details of each component will be described.

### 1-1. Resin fiber layer

### 1-1-1. Components

The resin fiber layer 20 is a fiber structure formed of a hot-melt resin (also referred to as a hot-melt adhesive). The resin fiber layer 20 (hot-melt resin) is fused onto the substrate 30, whereby the resin fiber layer 20 is fixed onto the substrate 30.

The hot-melt resin contains a thermoplastic resin component as a main component. The hot-melt resin may contain another component.

### 1-1-1-1. Thermoplastic resin component

Examples of the thermoplastic resin component as a main component of the hot-melt resin constituting the resin fiber layer 20 include a polyolefin. That is, the thermoplastic resin component is preferably an olefin-based hot-melt resin. When the thermoplastic resin component is an olefin-based hot-melt resin, sound absorbency, workability, and the like of the fiber structure can be enhanced.

Examples of the polyolefin include polyethylene, polypropylene, polybutene-1, an ethylene-propylene copolymer, an ethylene-α-olefin copolymer, and a polymer blend of these.

The polyolefin is more preferably polypropylene. Since polypropylene solidifies in a relatively short time after being fused to the substrate 30, the fiber structure is easily retained stably, and polypropylene is more suitable for forming the resin fiber layer 20.

### 1-1-1-2. Other components

Examples of the other component include a known additive such as a tackifier, a plasticizer, a filler, a pigment, a dye, an antiaging agent, an antioxidant, an antistatic agent, a flame retardant, an antibacterial agent, a light stabilizer, a stabilizer, a dispersant, a solvent, a hydrophilizing agent, a wax, or a crystal nucleating agent.

The other component can be, for example, 30 parts by mass or less, 20 parts by mass or less, 10 parts by mass or less, 5 parts by mass or less, 1 part by mass or less, or 0.1 parts by mass or less with respect to 100 parts by mass of the hot-melt resin.

### 1-1-2. Physical properties/properties

### 1-1-2-1. Melt viscosity

A melt viscosity of the hot-melt resin constituting the resin fiber layer 20 at 180°C is preferably 200,000 mPa·s or less, 100,000 mPa·s or less, 50,000 mPa·s or less, 30,000 mPa·s or less, or 20,000 mPa·s or less.

In addition, the melt viscosity of the hot-melt resin at 180°C is preferably 1,000 mPa·s or more, 2,000 mPa·s or more, or 5,000 mPa·s or more.

The melt viscosity of the hot-melt resin constituting the resin fiber layer 20 at 200°C is preferably 100,000 mPa·s or less, 50,000 mPa·s or less, 25,000 mPa·s or less, 20,000 mPa·s or less, or 18,000 mPa·s or less.

In addition, the melt viscosity of the hot-melt resin at 200°C is preferably 500 mPa·s or more, 1,000 mPa·s or more, 1,500 mPa·s or more, or 3,000 mPa·s or more.

By setting the melt viscosity of the hot-melt resin within such a range, it becomes easy to spray-apply the hot-melt resin and obtain the resin fiber layer 20 having excellent sound absorbency.

The melt viscosity is measured for the hot-melt resin heated to a predetermined temperature under conditions of a swing angle of 10% and an angular frequency of 1 rad/s using a parallel plate rheometer.

### 1-1-2-2. Crystallization temperature/crystallization energy

A crystallization temperature of the hot-melt resin constituting the resin fiber layer 20 is preferably 50 to 150°C, 75 to 140°C, or 90 to 135°C. By setting the crystallization temperature within such a range, workability, sound absorbency, and the like can be improved in a well-balanced manner.

Crystallization energy (crystallization heat) of the hot-melt resin is preferably 20 to 200 mJ/mg, 60 to 150 mJ/mg, or 70 to 100 mJ/mg. By setting the crystallization energy within such a range, workability, sound absorbency, and the like can be improved in a well-balanced manner.

The crystallization temperature and crystallization energy are measured in accordance with JIS K 7121.

### 1-1-2-3. Storage modulus, loss modulus, loss tangent, and glass transition temperature

A lower limit value of a storage modulus G' of the hot-melt resin is preferably 10 MPa or more, 20 MPa or more, 50 MPa or more, 75 MPa or more, 90 MPa or more, 100 MPa or more, 200 MPa or more, or 500 MPa or more. An upper limit value of the storage modulus G' of the hot-melt resin is, for example, 2,000 MPa or less, 1,500 MPa or less, 1,000 MPa or less, or 900 MPa or less.

The hot-melt resin preferably has a loss modulus G" of 50 MPa or less or 40 MPa or less.

The hot-melt resin preferably has a loss tangent tanδ (loss modulus G"/storage modulus G') of 1.00 or less, or 0.50 or less.

The hot-melt resin preferably has a glass transition temperature of -30 to 60°C or -25 to 40°C.

The storage modulus G' and the loss modulus G" are measured as follows.
Measurement method: rheometer
Apparatus name: MCR302 (Anton Paar)
Swing angle: 0.8°
Frequency: 10 Hz
Deformation mode: shear mode
Temperature: -50 to 110°C
Sample size: width 5 mm × 20 mm × thickness 1 mm
The storage modulus G' and the loss modulus G" are numerical values at 23°C.

A temperature corresponding to a peak value of the loss tangent tanδ described above is defined as a glass transition temperature.

By setting the storage modulus G', the loss modulus G", the loss tangent tanδ, or the glass transition temperature of the hot-melt resin within such a range, it is easy to obtain the resin fiber layer 20 excellent in sound absorbency, shape retention, workability, and the like.

In particular, by setting the storage modulus G' of the hot-melt resin within such a range, it is easy to obtain the resin fiber layer 20 having higher sound absorbency and extremely better shape retention.

### 1-1-2-4. Air permeability

The air permeability of the resin fiber layer 20 is preferably 10.0 cm³/cm²/s or more, 15.0 cm³/cm²/s or more, 20.0 cm³/cm²/s or more, 30.0 cm³/cm²/s or more, 40.0 cm³/cm²/s or more, 45.0 cm³/cm²/s or more, or 55.0 cm³/cm²/s or more.

The air permeability of resin fiber layer 20 is preferably 200 cm³/cm²/s or less, 150 cm³/cm²/s or less, 100 cm³/cm²/s or less, 95.0 cm³/cm²/s or less, 85.0 cm³/cm²/s or less, or 80.0 cm³/cm²/s or less. By setting the air permeability of the resin fiber layer 20 within such a range, excellent sound absorbency can be obtained.

In particular, in the resin fiber layer 20 formed of a hot-melt resin, by setting the air permeability within such a range while using fibers having a preferable fiber diameter, void distribution and fiber distribution are appropriate, and extremely excellent sound absorbency can be obtained.

The air permeability of the resin fiber layer 20 is measured in accordance with an air permeability test of JIS L 1096.

Note that when the resin fiber layer 20 is joined to the substrate 30, the air permeability of the resin fiber layer 20 can be a numerical value obtained by forming the same resin fiber layer (resin fiber layer having an equal component, structure, thickness, and the like) on a release film, removing the release film to manufacture a single-layered resin fiber layer, and measuring the air permeability of the resin fiber layer.

### 1-1-3. Structure

### 1-1-3-1. Fiber diameter

A fiber diameter of a fiber constituting the resin fiber layer 20 can be, for example, 1 to 100 µm, 3 to 30 µm, or 5 to 20 µm. When the fiber diameter is within such a range, excellent sound absorbency can be obtained. A method for calculating the fiber diameter is as follows. First, the resin fiber layer 20 is photographed with an SEM, fiber diameters (widths of minor axes) of ten fibers included in the obtained image are measured, and an average thereof is taken as the fiber diameter.

### 1-1-3-2. Thickness

Although details will be described later, the laminate 10 of the present embodiment is formed by spray-applying a hot-melt resin onto the substrate 30 to fuse the resin fiber layer 20 onto the substrate 30. In addition, the thickness of the resin fiber layer 20 can be formed substantially uniformly. Therefore, stable sound absorbency can be sufficiently exhibited.

The thickness of the resin fiber layer 20 can be, for example, 0.1 to 100 mm, 1 to 50 mm, 5 to 40 mm, or 10 to 30 mm. By setting the thickness of the resin fiber layer 20 within such a range, excellent sound absorbency can be obtained while manufacture is easy.

A thickness reduction ratio of the resin fiber layer 20 is preferably 40% or less, 30% or less, 20% or less, 10% or less, or 7% or less. When the thickness reduction ratio of the resin fiber layer 20 is within such a range, high sound absorbency is easily exhibited over a long period of time.

Here, the thickness reduction ratio of the resin fiber layer 20 is measured by the following method.

The thickness of the resin fiber layer 20 immediately after manufacture (the resin fiber layer 20 in a state in which the hot-melt resin is sufficiently solidified) is defined as an initial thickness T_{A}.

The thickness after the resin fiber layer 20 is retained for one week (168 hours) under constant temperature and humidity conditions (25°C, 50%RH) is defined as a post-retention thickness T_{B}.

The thickness reduction ratio is calculated as [(T_{A} - T_{B})/T_{A}].

When the laminate 10 of the present embodiment is used as a sound absorbing material, a frequency band in which sound is easily absorbed changes depending on the thickness of the resin fiber layer 20. For example, by increasing the thickness of the resin fiber layer 20, a peak of a sound absorption frequency shifts to a lower sound side. Therefore, the thickness can be adjusted according to an application of the resin fiber layer 20, an environment in which the resin fiber layer 20 is used, and the like.

On the other hand, in prior art (Patent Literature 1) in which a substrate and a resin fiber layer are integrally joined to each other by spot-like welding using ultrasonic welding or the like, the resin fiber layer has a recessed structure in which a plurality of recessed welded portions are formed. The recessed welded portion is a recessed portion formed because the resin fiber layer is spot-welded to the substrate. The recessed welded portion refers to a portion having a thickness of 1/2 or less of the thickness of the resin fiber layer and a width of 5 mm or more and 10 mm or less. In the recessed welded portion, since the thickness of the resin fiber layer is thinner than that in another portion, sound absorbency cannot be sufficiently exhibited.

On the other hand, the laminate 10 of the present embodiment is formed such that the resin fiber layer 20 is fused onto the substrate 30 by spray-applying a hot-melt resin onto the substrate 30 as described above. That is, almost the entire surface of the resin fiber layer 20 is fixed (fused) to the substrate 30. This eliminates the need for joining by spot welding as in prior art, and thus the resin fiber layer 20 does not have a recessed welded portion (recessed structure). Therefore, the laminate 10 of the present embodiment can sufficiently exhibit stable sound absorbency.

### 1-1-3-3. Basis weight

The basis weight of the resin fiber layer 20 can be, for example, 50 to 1,000 g/m², 75 to 750 g/m², or 100 to 500 g/m². By setting the basis weight of the resin fiber layer 20 within such a range, excellent sound absorbency can be obtained.

The fiber diameter, basis weight, thickness, air permeability, and the like can be adjusted by the melt viscosity of the hot-melt resin, the type of nozzle used when the hot-melt resin is spray-applied, and spray application conditions (pressure, time, and the like).

The resin fiber layer 20 according to the present embodiment has excellent sound absorbency, and therefore can be preferably used as a sound absorbing material.

### 1-2. Substrate

### 1-2-1. Shape

The shape of the substrate 30 is not particularly limited, and an appropriate shape can be used. In particular, the resin fiber layer 20 according to the present embodiment can be formed only by spray-applying a hot-melt resin onto the substrate 30. Therefore, even when a member having a complicated shape is used as the substrate 30, the resin fiber layer 20 can be easily manufactured on the substrate 30, and excellent sound absorbency can be imparted thereto.

For example, a member having a plurality of ribs (protrusions) may be used for the substrate 30. Fig. 2 is a cross-sectional view schematically illustrating a laminate when a member having ribs is used as a substrate. Fig. 2(a) illustrates a conventional laminate formed by welding, and Fig. 2(b) illustrates the laminate 10 of the present embodiment.

In the case of the conventional laminate in which the laminate is formed by welding, welding is usually performed so as to avoid a portion where a rib exists on a substrate {Fig. 2(a)}. Therefore, a resin fiber layer cannot be formed over the rib.

On the other hand, in the laminate 10 of the present embodiment, since the resin fiber layer 20 is formed by spray-applying a hot-melt resin onto the substrate 30, the resin fiber layer 20 can be formed over a rib 31 {Fig. 2(b)}.

The laminate 10 of the present embodiment can be easily manufactured without being affected by the shape of the substrate 30 even when a plurality of ribs (protrusions) 31 are formed on the substrate 30.

In addition, since the resin fiber layer 20 is formed over the ribs 31 in the laminate 10 of the present embodiment, the area (sound absorbing area) of the resin fiber layer 20 is increased as compared with the conventional laminate formed by welding. As a result, better sound absorbency can be exhibited.

### 1-2-2. Material

As a material of the substrate 30, an olefin-based resin (polyolefin) is preferably used.

Examples of the polyolefin include polyethylene, polypropylene, polybutene-1, an ethylene-propylene copolymer, an ethylene-α-olefin copolymer, and a polymer blend of these. One of these materials may be used singly, or a composite or the like of two or more materials may be used.

As described above, in the laminate 10 of the present embodiment, the resin fiber layer 20 is formed of an olefin-based hot-melt resin. When the resin fiber layer 20 and the substrate 30 are formed of the same olefin-based material, joining strength between the resin fiber layer 20 and the substrate 30 can be increased.

In the conventional laminate, a substrate and a resin fiber layer are often formed of different materials, and it is necessary to separate the substrate and the resin fiber layer at the time of recycling. On the other hand, in the laminate 10 of the present embodiment, the same olefin-based material is used for the resin fiber layer 20 and the substrate 30. Therefore, the operation of separating the resin fiber layer 20 and the substrate 30 at the time of recycling is unnecessary, and the process is easy.

### 2. Method for manufacturing laminate

Hereinafter, a method for manufacturing a laminate will be described.

The laminate is obtained by directly spray-applying a hot-melt resin retained in a molten state onto a substrate. The hot-melt resin formed into a fibrous form by spray application is brought into contact with the substrate in a molten and/or softened state to be fused to the substrate, and the hot-melt resin is cooled and solidified to form a resin fiber layer.

As a spraying method, a known method, for example, curtain spray, omega spray, spiral spray, or summit spray can be applied.

On the other hand, in the conventional laminate in which a substrate and a resin fiber layer are integrally joined to each other by spot-like welding using ultrasonic welding or the like, a welded portion at the time of welding has a high temperature of about 300°C, and a load applied to the substrate is large. On the other hand, since the laminate of the present embodiment is obtained by spray-applying a hot-melt resin onto a substrate, a load applied to the substrate can be reduced as compared with the conventional laminate.

Note that the hot-melt resin used for spray application can be manufactured by a known method. For example, it is only required to put the above-described raw materials into a continuous kneader such as a single-screw or twin-screw extruder, or a batch-type kneader such as a roll, a Banbury mixer, a kneader, a planetary mixer, or a high-shear Z-blade mixer, and to knead the raw materials at a predetermined temperature for a predetermined time.

The substrate may be subjected to a surface treatment (cleaning, smoothing, roughening, discharge treatment, UV treatment, and the like) for the purpose of, for example, increasing joining strength of the resin fiber layer to the substrate.

In the laminate of the present embodiment, operation is completed only by a simple step of spray-applying a hot-melt resin onto a substrate to form a resin fiber layer, and the laminate has a function that the hot-melt resin itself adheres to the substrate (a step of heating and welding a nonwoven fabric and a step of performing adhesive processing on a nonwoven fabric are unnecessary). Therefore, a resin fiber layer derived from a hot-melt resin and having excellent sound absorbency can be easily formed, and peeling hardly occurs because the resin fiber layer is substantially uniformly bonded by surface bonding.

The conventional laminate obtained by spot-welding a previously prepared resin fiber layer to a substrate and the laminate of the present embodiment obtained by spray-applying a hot-melt resin to a substrate have different bonding areas. That is, in the conventional laminate, the number and area of welded portions are limited, and the resin fiber layer is bonded to the substrate only at the welded portions. On the other hand, in the laminate of the present embodiment, the resin fiber layer can be bonded to almost the entire surface of the substrate.

More specifically, in the conventional laminate obtained by spot-welding a resin fiber layer, a bonding area of the resin fiber layer is usually less than 10%, and the resin fiber layer is easily peeled off.

On the other hand, in the laminate according to the present embodiment, a ratio of a bonding area between the resin fiber layer and the substrate to the area of the substrate is 10% or more, 30% or more, 50% or more, 60% or more, 70% or more, or 80% or more. In addition, the bonding area of the resin fiber layer to the area of the substrate can be, for example, 99% or less, 95% or less, or 90% or less. In the laminate according to the present embodiment, the substrate and the resin fiber layer are sufficiently bonded to each other while a fiber structure is maintained.

Note that the bonding area of the resin fiber layer can be calculated by peeling fibers located in a portion other than the bonded portion from the substrate and analyzing the bonded portion (portion remaining after the fibers are peeled) under a microscope.

### 3. Application

Application sites of the laminate and the sound absorbing material of the present embodiment are not particularly limited, and may be any site where sound absorption is required. For example, the laminate and the sound absorbing material can be applied to an interior member and an exterior member of a building or a vehicle such as an airplane, a ship, or a car (an automobile or a railway car).

### Examples

Hereinafter, the laminate of the present invention will be specifically described with reference to Examples, but the present invention is not limited thereto. Note that, in Examples, a melt flow rate (MFR) is a value measured in accordance with JIS K7210-1:2014 (ISO1133-1:2011), Plastics - Determination of the melt mass-flow rate (MFR) and melt volume-flow rate (MVR) of thermoplastics - Part 1: Standard method.

### <<Manufacture of laminate/resin fiber layer>>

As an olefin-based hot-melt resin constituting a resin fiber layer, the following resins were used.
PP_1 (polypropylene manufactured by Dong Chang Chemical Co., Ltd., MFR 1500 g/10 min)
PP_2 (polypropylene manufactured by Dong Chang Chemical Co., Ltd., MFR 1800 g/10 min)
PP (polypropylene manufactured by Xiamen Keyuan, MFR 1500 g/10 min)
PR100 (polypropylene manufactured by TEX YEAR): B-type viscosity 1200 cps (190°C)

A molten hot-melt resin retained at 180°C was spray-applied to a polypropylene (PP) substrate, and the hot-melt resin was cooled and solidified at normal temperature to obtain each of laminates according to Examples 1 to 4 including the substrate and a resin fiber layer. Auto Supply (manufactured by ITW) (nozzle: 6-hole omega) was used for spray application in Examples 1 and 3. Auto Supply (manufactured by ITW) (nozzle: AE3) was used for spray application in Examples 2 and 4.

Components of the resin fiber layer (hot-melt resin), a thickness, a basis weight, a fiber diameter, an air permeability, a storage modulus G', a loss modulus G", a loss tangent tanδ, a glass transition temperature, and a tack-free time of the resin fiber layer in each of Examples are presented in each Table. The tack-free time is a time until resin fibers do not adhere to a finger after the hot-melt resin is spray-applied. In addition, a photograph (SEM photograph) obtained by photographing fibers of the resin fiber layer in each of Examples under a scanning electron microscope (SEM) (VHX-D510 manufactured by KEYENCE CORPORATION) is presented in Table.

The thickness, basis weight, fiber diameter, and air permeability of the resin fiber layer were adjusted by changing spray application conditions (application time) and a nozzle diameter.

For the thickness of the resin fiber layer, the initial thickness T_{A} and the post-retention thickness T_{B} were measured according to the method described above, and a thickness reduction ratio was calculated together.

In Comparative Example 1, a laminate according to Comparative Example 1 was obtained by a similar manufacturing method to Example 1 except that DH-672 (polyamide manufactured by Nogawa Chemical Co., Ltd.) was used as a resin constituting a resin fiber layer.

Comparative Example 2 was manufactured by a similar manufacturing method to Example 1 except that SA08A (polypropylene manufactured by Japan Polypropylene Corporation): MFR 75 g/10 min was used as a resin constituting a resin fiber layer. In Comparative Example 2, a melt viscosity of the resin described above was higher than those in Examples 1 to 4, and it was difficult to form the resin fiber layer when a hot-melt resin was spray-applied to a substrate. For this reason, a laminate could not be obtained, and product evaluation could not be performed.

### <<Evaluation>>

For each of the laminates of Examples 1 to 4 and Comparative Examples 1 and 2, adhesiveness between the substrate (polypropylene) and the resin fiber layer and a sound absorption coefficient were evaluated.

### <Adhesiveness between substrate and resin fiber layer (adhesiveness with PP)>

Fibers (hot-melt resin) located in a portion other than a bonded portion were peeled off from the substrate, and the area of the bonded portion (portion remaining after the fibers were peeled off) was calculated under a microscope and evaluated as follows.
A: The bonding area is 80% or more.
B: The bonding area is 50% or more and less than 80%.
C: The bonding area is 10% or more and less than 50%.
D: The bonding area is less than 10%.

### <Sound absorption coefficient>

In accordance with JIS A 1405-2, a sound absorption coefficient was measured with a sample size: 28.9 φ, an incident surface: fiber surface, a target frequency: 4000 Hz, and n = 2, and evaluated as follows.
A: 0.6 or more and 1.0 or less
B: 0.5 or more and less than 0.6
C: 0.1 or more and less than 0.5

**[Table 1]**

| No. | | | Example 1 | Example 2 | Example 3 | Example 4 | Comparative Example 1 | Comparative Example 2 |
|---|---|---|---|---|---|---|---|---|
| Physical properties | Material | | PP_1 (Dong Chang chemical Co., Ltd.) | PP_2 (Dong Chang Chemical co., Ltd.) | PP(Xiamen Keyuan) | PR100(TEX YEAR) | DH-672 (Nogawa Chemical Co., Ltd.) Co., Ltd.) | SA08A(JPP) |
| | Material | | Polypropylene | Polypropylene | Polypropylene | Polypropylene | Polyamide | Polypropylene |
| | Melt viscosity [mPa · s] | 180°C | 18,500 | 14,400 | 24,000 | 1,900 | 1,500 | 365,500 |
| | | 200°C | 11,800 | 9,500 | 16,400 | 1,500 | 1,400 | 211,500 |
| | DSC | Crystallization °C temperature | 115.1 | 109.1 | 130.6 | 62.5 | 107 | 122.3 |
| | | Energy mJ/mg | 92.8 | 97.6 | 99.9 | 27.6 | 74 | 102 |
| | Viscoelasticity (23°C) | G' [MPa] | 582.6 | 501.0 | 865.7 | 44.3 | 93.9 | 373 |
| | | G" [MPa] | 26.1 | 26.3 | 38.6 | 2.5 | 8.0 | 16.8 |
| | | tan δ [-] | 0.04 | 0.05 | 0.04 | 0.06 | 0.09 | 0.05 |
| | Glass transition temperature [°C] | | -2.9 | 2.4 | 0.2 | -8.8 | -20.6 | 8.9 |
| | Tack-free time [s] | | Immeditely after application | Immediately after application | Immediately after application | 10 | Immediately after application | - |
| Condition | Nozzle | | 6-Hole omega | AE3 | 6-Hole omega | AE3 | 6-Hole omega | 6 Hole omega |
| Product evaluation | Thickness [mm] | Initial thickness T_{A} | 19 | 15 | 21 | 2.2 | 17 | - |
| | | Post-retention thickness T_{B} | 18 | 15 | 20 | 2.2 | 16 | |
| | | Thickness reduction ratio [%] | 5 | 0 | 5 | 0 | 6 | |
| | Basis weight [g/m²] | | 330 | 465 | 410 | 20 | 640 | |
| | Fiber diameter [*µ*m] | | 10 | 13 | 8 | 7 | 18 | |
| | Air permeability [cm³/cm²/s] | | 58.2 | 15.7 | 46.4 | 136 | 39 | |
| | Adhesiveness with substrate | | A | A | A | A | C | |
| | Sound absorption coefficient | | A | A | A | B | A | |
| | Resin fiber layer SEM observation (magnification × 1000) | | 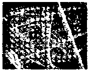 | 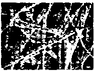 | 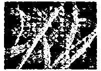 | 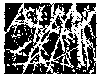 | 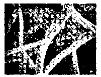 | - |

From the above results, it is understood that the laminate including the resin fiber layer according to each Example has sufficient sound absorbency. In addition, since the resin fiber layer is obtained only by spray-applying a molten hot-melt resin to an object, it is understood that the resin fiber layer is excellent in workability and has favorable adhesiveness to a substrate.

### Industrial Applicability

The laminate and the sound absorbing material of the present invention are easily recycled and have sufficient sound absorbency, and therefore can be used for an interior member and an exterior member in a building or a vehicle such as an airplane, a ship, or a car (an automobile or a railway car).

### Cross-reference to Related Applications

The present application claims priority based on Japanese Patent Application No. 2023-103689 filed with the Japan Patent Office on June 23, 2023, the entire disclosure of which is entirely incorporated herein by reference.

### Reference Signs List

- 10: Laminate
- 20: Resin fiber layer
- 30: Substrate
- 31: Rib (Protrusion)

## Claims

1. A laminate comprising:
a resin fiber layer formed of a hot-melt resin; and a substrate, wherein
the hot-melt resin is an olefin-based hot-melt resin,
a material of the substrate is an olefin-based resin, and
the resin fiber layer is formed by spray-applying the hot-melt resin onto the substrate.

2. A laminate comprising:
a resin fiber layer formed of a hot-melt resin; and a substrate, wherein
the hot-melt resin is an olefin-based hot-melt resin,
a material of the substrate is an olefin-based resin, and
a ratio of a bonding area between the resin fiber layer and the substrate to an area of the substrate is 10% or more.

3. A sound absorbing material comprising the laminate according to claim 1 or 2.

4. An automobile interior member comprising the laminate according to claim 1 or 2.
